# EUROPÄISCHE PATENTSCHRIFT

(11) **EP 1 106 538 B1**
(45) Veröffentlichungstag und Bekanntmachung des Hinweises auf die Patenterteilung: **06.08.2003**
(21) Anmeldenummer: 00122116.7
(22) Anmeldetag: 12.10.2000
(51) Int. Cl.: B65G 1/08, B65G 1/02

(54) **Behälter-Laufbahn oder -Förderstrecke**
Rollerway for containers or conveyor line
Chemin de roulement d'un récipient ou ligne de transport

(30) Priorität: 06.12.1999 DE 29921426 U
(43) Veröffentlichungstag der Anmeldung: 13.06.2001
(73) Patentinhaber: Fritz Schäfer Gesellschaft mit beschränkter Haftung, D-57290 Neunkirchen (DE)
(72) Erfinder: Schäfer, Gerhard, 57290 Neunkirchen (DE)
(74) Vertreter: Valentin, Ekkehard, Dipl.-Ing.

(56) Entgegenhaltungen:
- EP-A- 0 790 195
- DE-A- 3 219 543
- DE-U- 8 813 565
- DE-U- 29 606 752
- FR-A- 2 686 073

## Beschreibung

Die Erfindung betrifft eine Laufbahn oder Förderstrecke zur Aufnahme von Behältern, z.B. Transport- und/oder Lagerkästen, Kleinladungsträger oder dergleichen, von denen mehrere nebeneinander gelagert bzw. aufgestellt werden und denen zur Separierung und Führung mit einer Höhenverstellung ausgebildete Trennleisten zugeordnet sind.

Der Transport von - in der Regel mit Waren beladenen - Behältern findet in der Praxis in einem Fachbodenregal, einem Durchlaufregal (vgl. z.B. DE 37 16 503 A1) oder auf einer sonstigen Förderstrecke statt. Das Lagergut bzw. die Behälter werden dabei von einer Einlagerungsseite zu einer Entnahmeseite geschoben bzw. laufen über ein Gefälle mittels der Schwerkraft selbständig ab. Damit es zu keiner Behinderung von nebeneinander auf einer Lagerebene gelagerten bzw. aufgestellten Behältern kommt, ist eine Trennung bzw. Führung der Behälter erforderlich. Hierzu sind Trennleisten bekannt, die das nebeneinander abgestellte Lagergut bzw. die Behälter auf Abstand halten und gegenseitige Behinderungen ausschließen. Durch die DE 299 10 977.1 U ist es bekanntgeworden, neben den die Laufbahn bildenden Rollenleisten mehrere durch Ein- bzw. Ausschwenken auf eine unterschiedliche Höhenlage einzustellende Schienen vorzusehen. Diese befinden sich je nach Schwenkstellung entweder oberhalb oder unterhalb der Auflageebene der Laufbahn bzw. Rollenleisten.

In der Praxis sind zwei Ausführungen für zwei grundsätzlich unterschiedliche Ladungsträger bzw. Behälter bekannt. Diese sind nämlich an ihrer Unterseite einerseits mit einem glatten, durchgehenden Boden und andererseits mit unteren Stegen bzw. Nuten ausgebildet. Bei Behältern, die einen glatten Boden aufweisen, wird die Führung und Trennung durch seitliche, d.h. jeweils zwischen zwei benachbarten Behältern angeordneten Trennleisten sichergestellt. Die mit einer Nut am Boden ausgebildeten Behälter werden hingegen mittels einer in die Nut eingreifenden Führungs- bzw. Trennleiste geführt.

Beiden Führungssystemen ist gemeinsam, daß die Anordnung der Trenn- und Führungsleisten zur Abstimmung auf die jeweilige bestimmte Breite der Behälter über eine veränderbare Befestigung, z.B. durch Schrauben oder Stecken, der Trennleisten vorgenommen werden muß. Während bei Behältern mit glattem Boden die seitlichen Trennleisten bei jeder Breitenänderung der Behälter mit verstellt werden müssen, braucht bei den eine Nut aufweisenden Behältern eine Breitenänderung nur dann vorgenommen zu werden, wenn sich das Raster und die Abmessung der Nut im Behälter verändert. Hinzu kommt noch, daß die Behälter wahlweise längs- oder quereingelagert werden. Hier hat sich gezeigt, daß ganz besonders beim Einsatz an Fertigungsstraßen (Kanban) eine häufige Umstellung bzw. Anpassung der Trennleisten notwendig ist, was beim Umbau jedesmal einen großen Zeitaufwand erfordert. Dies ist bei zum Einsatz kommenden Sonderladungsträgern mit glattem Boden sogar unumgänglich, die wegen ihrer von den gängigen Behältertypen abweichenden Abmessungen einen Umbau zwingend notwendig machen.

Der Erfindung liegt daher die Aufgabe zugrunde, eine Laufbahn bzw. Förderstrekke der eingangs genannten Art zu schaffen, die auf einfache Weise eine Anpassung der Trennleistenführung an unterschiedliche Behältnisse erlaubt.

Diese Aufgabe wird erfindungsgemäß dadurch gelöst, daß die Trennleisten aus ineinander angeordneten, teleskopierbaren und arretierbaren Profilen bestehen. Es wird damit eine gestufte oder stufenlose Höhenverstellung erreicht, die es erlaubt, die Trenn- bzw. Führungsleiste bedarfsweise schnell nach unten unter das Niveau des Behälterbodens abzusenken bzw. zu verschieben und umgekehrt ebenso schnell wieder hochzustellen, wobei die Lagerfläche zuvor nicht einmal geleert werden muß. Ohne einen Ausbau der Führung vornehmen zu müssen, läßt sich somit auf einfache Weise sicherstellen, daß eine behälterbedingt zuvor zum Eingriff in eine Bodennut ausgerichtete bzw. hochgestellte Trennleiste nach dem Absenken den Transport eines anderen, mit einem glatten Boden ausgestatteten Behälters nicht behindert.

Zur Höhenverstellung braucht lediglich die Arretierung für das innere Profil gelöst und nach dem Einstellen auf die gewünschte Höhenlage (Absenken oder Anheben) nur wieder gesichert zu werden. Hierzu reichen zwei ineinanderzuschiebende Profile aus, wobei eine Arretierung in verschiedenen gewünschten Stellungen bzw. Positionen möglich ist.

Wenn vorteilhaft das äußere Profil mit einem Bolzen versehen ist, auf dem das innere Profil mit in seinen Flanschen vorgesehenen, eine geschlossene Öffnung bildenden Langlöchern angeordnet ist, läßt sich durch den Bolzen bzw. Stift neben der Fixierung der eingestellten Höhenlage auch die Trennleiste bzw. deren zur Neueinstellung gelöstes Profil sichern bzw. unverlierbar in seiner abgesenkten Position halten. Dies ist bei herkömmlichen Führungen nicht der Fall, die nach einem Umbau mitunter leicht verloren gingen. Die Sicherung wird durch die geschlossene Öffnung des Langlochs unterstützt, die verhindert, daß das innere Profil aus dem äußeren Profil herausgehoben werden kann und somit ein unbeabsichtigtes Trennen der beiden Profile der Leiste ausschließt.

Nach einer vorteilhaften Ausgestaltung der Erfindung sind die Langlöcher schräg verlaufend ausgebildet. Der schräge Verlauf der Langlöcher trägt dazu bei, daß sich die Trennleiste bzw. die Trennleistenprofile bei von den Behältern während des Einlagerns und Transports bewirkten Schlägen nicht unbeabsichtigt verstellt.

Weitere Einzelheiten und Vorteile der Erfindung ergeben sich aus den Ansprüchen und der nachfolgenden Beschreibung von in den Zeichnungen dargestellten Ausführungsbeispielen der Erfindung. Es zeigen:
- Fig. 1: in schematischer Weise als Einzelheit zwei benachbarte Rollen einer Laufbahn oder Förderstrecke mit zwischen den Rollen angeordneter, höhenverstell- und einstellbarer Trennleiste zum Transport eines teilweise gezeigten, mit einem glatten Boden ausgebildeten Behälters;
- Fig. 2: eine der Schemazeichnung nach Fig. 1 entsprechende Darstellung zum Transport eines Behälters mit demgegenüber einen Nuten besitzenden Boden und in die Nut hochgestellter Trennleiste;
- Fig. 3: eine vergrößerte Darstellung der Fig. 1 mit Darstellung eines Stiftes zur Sicherung des hochstellbaren Trennleistenteils; und
- Fig. 4: als Einzelheit eine Seitenansicht auf ein Innenprofil der Trennleiste mit darin schräg verlaufendem Langloch; rchts daneben sind Langlochvarianten gezeigt.

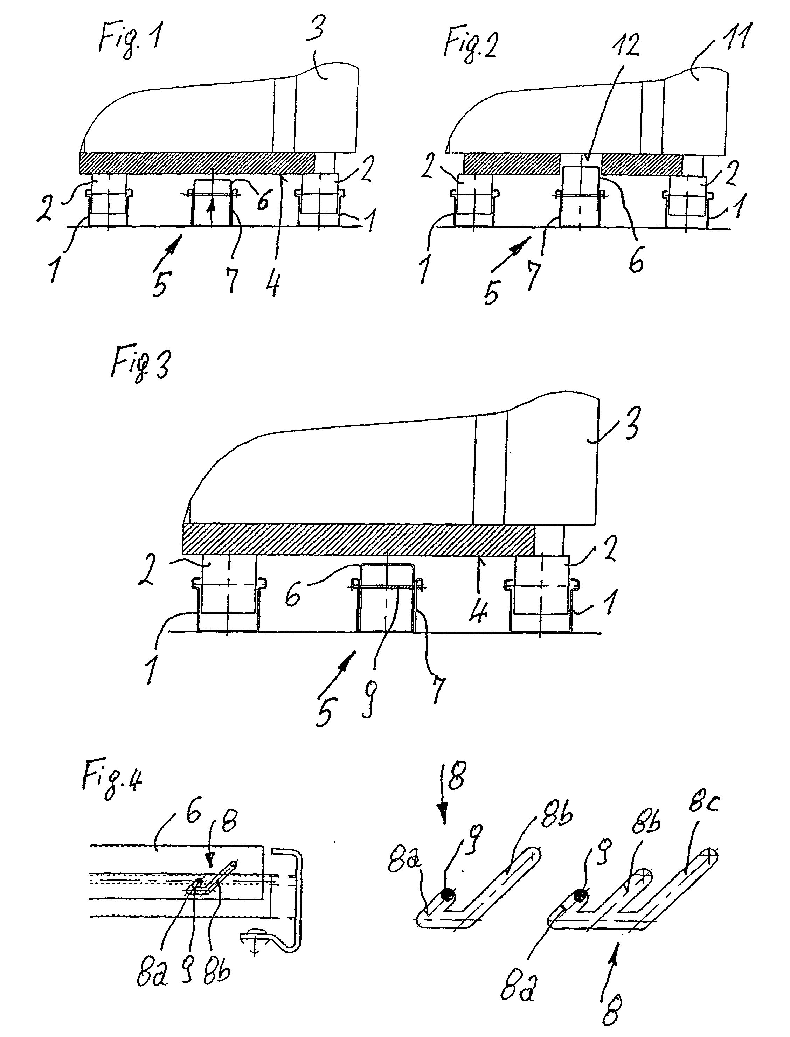

Von einer aus mehreren nebeneinanderliegenden Rollen bzw. Röllchen gebildeten Laufbahn oder Förderstrecke zum Transport von auf der Laufbahn bzw. der Förderstrecke nebeneinander aufgestellten Behältern sind in Fig. 1 zwei in benachbarten Rollenleisten 1 gelagerte Röllchen 2, in der Regel aus Kunststoff, alternativ aus Stahl, gezeigt. Der zum Transport auf den Röllchen 2 aufgestellte Behälter 3 besitzt einen glatten Boden 4. Damit dieser ungehindert über die von den Röllchen 2 gebildete Laufbahn bzw. Förderstrecke ablaufen kann, ist eine zwischen den Röllchen 2 angeordnete, höhenverstellbare Trennleiste 5 unter das Niveau des Bodens 4 abgesenkt.

Die Trennleiste 5 ist zu diesem Zweck - wie sich näher aus Fig. 3 entnehmen läßt
- aus zwei ineinandergreifenden Profilen, und zwar dem inneren Profil 6 und dem äußeren Profil 7 zusammengesetzt. Von den - im Ausführungsbeispiel U-förmigen
- Profilen ist das innere Profil 6 in seinen Seitenflanschen mit endseitig geschlossenen, schräg verlaufenden Langlöchern 8 (vgl. Fig. 4) ausgebildet. Ein durch das äußere Profil 7 gesteckter und die Langlöcher 8 in den beiden Flanschen des inneren Profils 6 durchdringender Bolzen bzw. Stift 9 trägt das innere Profil 6 somit auch dann unverlierbar, wenn z.B. eine Feststellmutter des Bolzens bzw. Stifts 9 gelöst ist. Nach dem Lösen der Feststellmutter ist das Absenken des inneren Profils 6 und damit der Trennleiste 5 unter das Niveau des Behälterbodens 4 möglich.

Bei einer alternativen, in Fig. 3 gezeigten Ausführung zur Arretierung der eingestellten Höhenlage der Trennleiste 5 kann eine Feststellmutter entfallen. In diesem Fall weist das innere Profil 6 unterschiedlich lange Langlöcher 8a, 8b, 8c (vgl. rechts neben der Fig. 4) auf, die miteinander verbunden sind. Es baucht somit das äußere Profil 7 nur leicht angehoben und durch Verschieben mit seinem Bolzen 9 in z.B. ein tieferes Langloch 8a oder 8b eingerastet zu werden.

Zum Transport eines in Fig. 2 gezeigten anderen Behälters 11, dessen Boden 4 mit Nuten 12 ausgebildet ist, braucht das innere Profil 6 aus seiner in den Fig. 1 und 3 dargestellten Position nur so weit angehoben und in dieser Höhenposition durch Anziehen der Feststellmutter 10 oder Einrasten in in Langloch anderer Länge gesichert zu werden, bis es ausreichend tief in die Nut 12 eintaucht, wie in Fig. 2 gezeigt, um seine Führungs- und Trennaufgabe übernehmen zu können. Ein benachbarter Behälter 11 wird auf die gleiche Weise geführt, wobei die Trennleisten 5 mit dem hochgestellten Innenprofil 6 die Behälter auf den gewünschten Abstand voneinander halten.

Die teleskopierbare Trennleiste 5 mit dem im äußeren Profil 7 höhenverstellbaren und in der gewünschten Position feststellbaren inneren Profil 6 ermöglicht somit eine Trennung und Führung unterschiedlicher Behälter 3, 11, d.h. entweder mit glattem Boden oder mit in den Boden eingearbeiteten Nuten 12, gleich ob diese längs- oder quer eingelagert werden. Dies geschieht ohne Ausbau bzw. umständlichen Umbau der Trennleiste 5, indem das innere Profil 6 der Trennleiste 5 lediglich entsprechend abgesenkt bzw. angehoben und fixiert zu werden braucht. Damit sind gleichzeitig Beschädigungen, beispielsweise eines Regals, durch unsachgemäßen Umbau vermieden.

## Patentansprüche

1. Laufbahn oder Förderstrecke zur Aufnahme von Behältern, z.B. Transportund/oder Lagerkästen, Kleinladungsträger oder dergleichen, von denen mehrere nebeneinander gelagert bzw. aufgestellt werden und denen zur Separierung und Führung mit einer Höhenverstellung ausgebildete Trennleisten zugeordnet sind,
**dadurch gekennzeichnet,**
**daß** die Trennleisten (5) aus ineinander angeordneten, teleskopierbaren und arretierbaren Profilen (6; 7) bestehen.

2. Laufbahn oder Förderstrecke nach Anspruch 1,
**dadurch gekennzeichnet,**
**daß** das äußere Profil (7) mit einem Bolzen (9) versehen ist, auf dem das innere Profil (6) mit in seinen Flanschen vorgesehenen, eine endseitig geschlossene Öffnung bildenden Langlöchern (8) angeordnet ist.

3. Laufbahn oder Förderstrecke nach Anspruch 2,
**dadurch gekennzeichnet,**
**daß** die Langlöcher (8) schräg verlaufend ausgebildet sind.

4. Laufbahn oder Förderstrecke nach Anspruch 2 oder 3,
**dadurch gekennzeichnet,**
**daß** unterschiedlich lange Langlöcher (8a, 8b, 8c) miteinander verbunden sind.

## Claims

1. A slide way or conveyor section for receiving receptacles, e.g., transport and/or storage boxes, low-load containers or the like, wherein several receptacles are stored or placed adjacent to one another, as well as separated and guided by means of height-adjustable separating strips,
**characterized by** the fact
that the separating strips (5) consist of lockable telescopic profiles (6; 7) that are arranged within one another.

2. The slide way or conveyor section according to Claim 1,
**characterized by** the fact
that the outer profile (7) is provided with a bolt (9), on which the inner profile (6) is arranged with oblong holes (8) that are situated in its flanges and form an opening that is closed on the end face.

3. The slide way or conveyor section according to Claim 2,
**characterized by** the fact
that the oblong holes (8) extend transversely.

4. The slide way or conveyor section according to Claim 2 or 3,
**characterized by** the fact
that oblong holes (8a, 8b, 8c) of different lengths are connected to one another.

## Revendications

1. Voie de déroulement ou galerie de roulage pour l'accueil de conteneurs, par exemple des caisses de transport et/ou d'entreposage, des supports de vêtements ou similaires, dont plusieurs sont entreposés ou disposés côte à côte et auxquels sont affectés des barres de séparation pour la séparation et le guidage avec un réglage de la hauteur,
**caractérisée en ce que**
les barres de séparation (5) se composent de profils (6 ; 7) aménagés l'un dans l'autre, télescopiques et pouvant être bloqués.

2. Voie de déroulement ou galerie de roulage selon la revendication 1,
**caractérisée en ce que**
le profil extérieur (7) est pourvu d'une goupille (9) sur laquelle est aménagée le profil intérieur (6) avec des trous oblongs (8) prévus dans ses brides, formant une ouverture fermée du côté de l'extrémité.

3. Voie de déroulement ou galerie de roulage selon la revendication 2,
**caractérisée en ce que**
les trous oblongs (8) sont développés de manière à s'étendre en diagonale.

4. Voie de déroulement ou galerie de roulage selon les revendications 2 ou 3,
**caractérisée en ce que**
des trous oblongs (8a, 8b, 8c) de longueurs différentes sont reliés ensembles.
